# DEMANDE DE BREVET EUROPEEN

(11) **EP 4 424 154 A1**
(43) Date de publication de la demande: **04.09.2024**
(21) Numéro de dépôt: 24160007.1
(22) Date de dépôt: 27.02.2024
(51) Int. Cl.: A01K 73/045

(54) **PANNEAU DE CHALUT**

(30) Priorité: 02.03.2023 FR 2301969
(71) Demandeur: Etablissements Morgere, 35540 Miniac Morvan (FR)
(72) Inventeur: REVERSEAU, Pascal, 22100 DINAN (FR)
(74) Mandataire: Regimbeau

(57) **Abrégé**

L'invention concerne un panneau de chalut (1) qui comporte une face dorsale (10) et une face ventrale (11) et qui est délimité par un bord d'attaque (12) et un bord de fuite (13), ainsi que par un bord supérieur (14) et un bord inférieur (15), ce panneau (1) étant pourvu d'au moins trois nervures (16,17,18) parallèles et comprenant une première nervure médiane (16) qui s'étend dudit bord d'attaque (12) audit bord de fuite (13), ainsi qu'une deuxième nervure supérieure (17) et une troisième nervure inférieure (18), ces deuxième et troisième nervures (17,18) étant de longueur identique et l'image d'une de l'autre par rapport à ladite première nervure médiane (16),
caractérisé par le fait que l'extrémité (160) de ladite première nervure médiane (16), du côté dudit bord de fuite (13), se situe en retrait de celles (170,180) desdites nervures supérieure et inférieure (17,18).

## Description

### DOMAINE TECHNIQUE GENERAL

La présente invention se situe dans le domaine de la pêche en mer et se rapporte plus spécifiquement à un panneau de chalut.

### ETAT DE LA TECHNIQUE

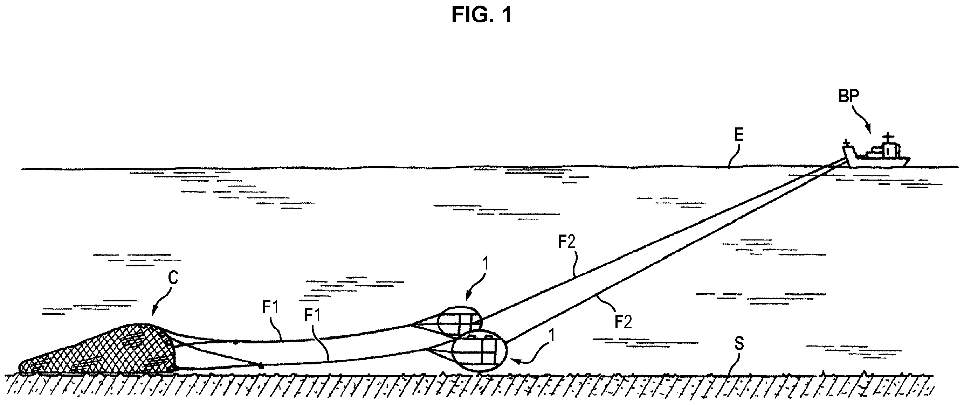

A la figure 1 annexée, on a désigné par la référence BP un bateau de pêche qui navigue à la surface de l'eau E et qui traîne un chalut C. Sur cette figure est représentée une opération de pêche sur le fond marin S. Le chalut C consiste en un filet en forme de poche.

Ce chalut C est relié par des filins (appelés également pattes) F1 à la face dorsale de deux panneaux de chalut 1. Ceux-ci sont représentés de manière purement symbolique dans un seul but d'illustration.

Ces panneaux sont reliés au bateau BP par deux autre filins F2 (appelés également funes).

Le rôle des deux panneaux de chalut 1 est de maintenir la poche convenablement ouverte au cours de la pêche, grâce à l'effet hydrodynamique lié à la vitesse d'écoulement de l'eau sur les panneaux, à leur forme et à leur angle d'attaque dans l'eau. Ces panneaux tribord et bâbord sont similaires mais ont une configuration inverse, symétrique l'une de l'autre.

Différents panneaux de chaluts sont déjà présents sur le marché. Leurs ratios hauteur/largeur sont très différents en fonction des différentes pêches ciblées. Les caractéristiques techniques des panneaux sont définies au travers des coefficients de « lift » (Cl) et de « drag » (Cd).

Le premier coefficient caractérise la puissance d'écartement du panneau et le second sa trainée. L'objectif est d'avoir un ratio Cl/Cd le plus élevé possible.

Une autre caractéristique très importante est la stabilité des panneaux. C'est un élément majeur qui doit subsister quels que soient les conditions météorologiques, les paramètres de pêche (vitesse, longueur de filage, profondeur de pêche, virage, etc.) et de fond marin (fonds durs, sablonneux, vaseux, etc.).

Les panneaux doivent toujours se tenir debout et au même niveau, afin de maintenir l'écartement souhaité et assurer le bon rendement de l'opération de pêche.

A l'heure actuelle et compte-tenu de la législation en vigueur, les temps de pêche et les zones de pêche se réduisent et obligent les pêcheurs à optimiser leur matériel afin de ne pas avoir de temps perdu lors des opérations de pêche.

Améliorer la stabilité des panneaux de chalut contribue à ce meilleur rendement durant l'opération de pêche. En effet, des panneaux qui ne tombent pas, c'est du temps de pêche optimisé.

On comprend aisément que de tels panneaux de chalut occasionnent de fortes turbulences dans l'eau, lesquelles ont un impact négatif sur leur trainée. Bien entendu, ceci a une répercussion immédiate sur la consommation de carburant du navire.

De plus, de telles turbulences ont une influence négative sur le comportement des espèces marines. En effet, elles s'opposent à la capacité des poissons à se diriger vers l'entrée du chalut.

Les documents CN106386717 et FR597185 illustrent un art antérieur d'intérêt dans le domaine de l'invention.

La présente invention vise donc à pallier les inconvénients détaillés plus haut. En d'autres termes, elle vise à proposer un panneau de chalut stable et dont la trainée est réduite, réduisant ainsi les turbulences précitées ainsi que la consommation de carburant du bateau, tout en assurant une puissance d'écartement importante.

### PRESENTATION DE L'INVENTION

Ces buts sont atteints conformément à l'invention qui se rapporte à un panneau de chalut qui comporte une face dorsale et une face ventrale et qui est délimité par un bord d'attaque et un bord de fuite, ainsi que par un bord supérieur et un bord inférieur généralement convexes, chacun de ces bords supérieur et inférieur étant relié à une extrémité correspondante dudit bord d'attaque, respectivement dudit bord de fuite, ce panneau étant pourvu d'au moins trois nervures parallèles formant saillie sur lesdites faces dorsale et ventrale et comprenant une première nervure médiane qui s'étend dudit bord d'attaque audit bord de fuite, ainsi qu'une deuxième nervure supérieure et une troisième nervure inférieure qui relient la zone de jonction dudit bord d'attaque audit bord supérieur, respectivement audit bord inférieur, à la zone de jonction dudit bord de fuite audit bord supérieur, respectivement audit bord inférieur, ces deuxième et troisième nervures étant de longueur identique et l'image d'une de l'autre par rapport à ladite première nervure médiane,
caractérisé par le fait que l'extrémité de ladite première nervure médiane, du côté dudit bord de fuite, se situe en retrait de celles desdites nervures supérieure et inférieure, de sorte que ledit bord de fuite comprend deux sections supérieure et inférieure qui convergent en direction de ladite extrémité de ladite première nervure médiane.

Grâce à ces caractéristiques, on améliore la stabilité du panneau et on constate une réduction notable des forces en présence dans la partie médiane du panneau, au voisinage de son bord de fuite, réduisant ainsi les turbulences et la trainée.

La forme particulière donnée au bord de fuite contribue à la stabilité ainsi qu'à la puissance d'écartement du panneau.

Selon d'autres caractéristiques avantageuses et non limitatives de l'invention, prises seules ou en combinaison :
- ledit bord de fuite comprend deux premiers segments supérieur et inférieur perpendiculaires à ladite première nervure médiane, qui se raccordent à deux seconds segments supérieur et inférieur et qui constituent ensemble lesdites sections supérieure et inférieure qui convergent en direction de ladite extrémité de ladite première nervure médiane ;
- lesdits premiers segments forment avec lesdits seconds segments un angle α compris entre 5 et 45° ;
- la longueur cumulée desdits deux premiers segments supérieur et inférieur est comprise entre 20 et 80% de la longueur totale dudit bord de fuite ;
- lesdits deux premiers segments supérieur et inférieur perpendiculaires à ladite première nervure médiane sont de longueur égale ou différente.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
La figure 1 est, comme indiqué plus haut, un schéma illustrant une pêche au chalut ;
La figure 2 est une vue de la face dorsale d'un panneau selon l'invention ;
La figure 3 est une vue de la face ventrale du panneau de la figure 1 ;
La figure 4 est une vue de détail d'une partie du bord de fuite du panneau selon l'invention ;
La figure 5 est une vue arrière du panneau des figures 2 à 4.

### DESCRIPTION DETAILLEE DE L'INVENTION

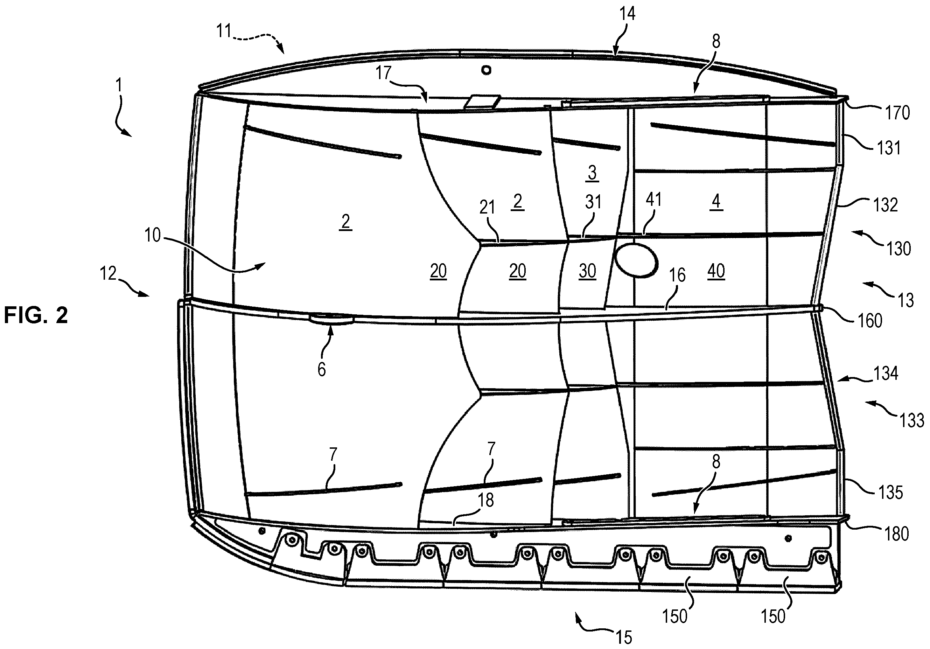

Le panneau de chalut 1 qui est représenté sur les figures 2 à 5, comporte une face 10 dite dorsale et une face opposée 11 dite ventrale.

Il s'inscrit globalement dans un quadrilatère régulier.

Le panneau représenté sur les figures 2 à 5 est un panneau bâbord, conformé pour assurer l'ouverture du chalut C sur son côté gauche lorsqu'il est tracté par un bateau de pêche BP.

Les deux panneaux 1 (Figure 1) tractés par le bateau ont une configuration inverse, symétrique l'une de l'autre.

Dans ces conditions, ce qui est décrit ci-après, relativement à un panneau 1, vaut également pour le second.

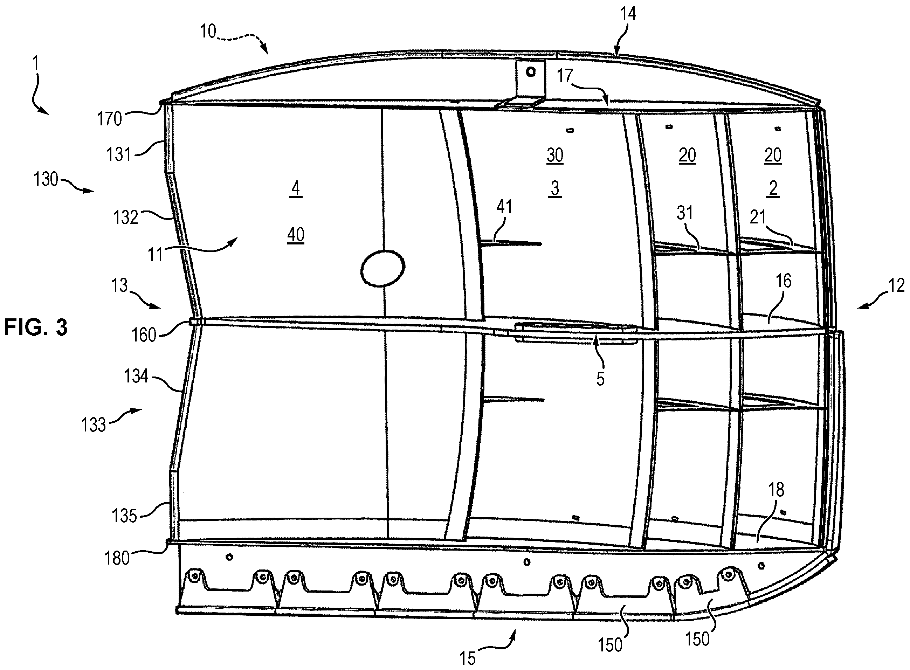

On a désigné sur les figures 2 et 3 le bord avant ou bord d'attaque du panneau 1 par la référence 12, tandis que son bord arrière ou bord de fuite porte la référence 13.

Dans l'exemple de réalisation présenté ici, le bord d'attaque 12 est sensiblement rectiligne. Toutefois, dans une variante non représentée, ce bord attaque pourrait avoir une forme convexe.

On reviendra plus loin dans la description sur la forme particulière du bord de fuite 13.

Ses bords supérieur et inférieur sont respectivement référencés 14 et 15 et sont courbes (convexes).

Ainsi que cela est bien connu, le bord inférieur 15 est garni d'une série de semelles amovibles adjacentes 150. Il s'agit de patins de glissement au sol qui sont prévus démontables, de sorte qu'ils peuvent être changés lorsqu'ils sont détériorés ou usés.

La forme particulière de ce bord inférieur 15 facilite le passage d'obstacles susceptibles de se trouver sur le fond marin, tels que des rochers notamment, limitant ainsi le risque de blocage du panneau 1.

Ainsi qu'on peut le voir sur les figures 2 et 3, le panneau 1 est subdivisé dans le sens de sa longueur en trois zones, à savoir une zone avant 2, une zone intermédiaire 3 et une zone arrière 4.

Ces trois zones sont elles-mêmes délimitées, sur la face dorsale 10 par trois nervures longitudinales et horizontales 16,17 et 18. Ces nervures font saillie de part et d'autre des deux faces 10 et 11.

La première nervure 16 est une nervure médiane qui s'étend du bord d'attaque 12 au bord de fuite 13, à mi-hauteur du panneau 1.

Les deux autres nervures sont constituées d'une deuxième nervure supérieure 17 et d'une troisième nervure inférieure 18. La deuxième nervure supérieure 17 relie la zone de jonction du bord d'attaque 12 au bord supérieur 14 à la zone de jonction du bord supérieur 14 au bord de fuite 13. La troisième nervure inférieure 18 relie la zone de jonction du bord d'attaque 12 au bord inférieur 15 à la zone de jonction du bord inférieur 15 au bord de fuite 13.

Ces deuxième et troisième nervures inférieures et supérieures sont de longueur identique et l'image l'une de l'autre par rapport à la première nervure médiane 16.

Les parties 2, 3 et 4 sont cintrées et sont fixées aux trois nervures précitées. Leur concavité est dirigée du côté de la face ventrale 11.

Leurs parties antérieures constituent des volets déflecteurs 20, 30 et 40 (également appelés « foils »), de sorte que l'eau de passage en cours d'utilisation peut se faire par des interstices ou fentes prévues entre ces volets. On a référencé 21,31 et 41 les entretoises qui séparent deux à deux ces volets.

Conformément à l'invention, l'extrémité 160 de la première nervure médiane 16, qui se situe du côté du bord de fuite 13, se situe en retrait de l'extrémité correspondante 170, respectivement 180, des deuxième et troisième nervures supérieure 17 et inférieure 18. Du fait de cette configuration particulière, le bord de fuite 13 comprend ainsi deux sections supérieure 130 et inférieure 133 qui convergent en direction de l'extrémité 160 de la première nervure médiane 16.

Selon le mode de réalisation représentée ici, le bord de fuite 13 comprend deux premiers segments supérieur 131 et 135 qui s'étendent perpendiculairement à la nervure médiane 16 et qui se raccordent à deux seconds segments supérieur 132 et inférieur 134, et qui constituent les sections supérieure et inférieure qui convergent en direction de ladite extrémité 160 de la première nervure médiane 16.

Ce profil particulier, qui rappelle la forme d'une queue de poisson, permet de réduire les forces en présence dans la partie médiane du bord de fuite 13, réduisant ainsi la traînée du panneau 1.

A contrario, le fait que ce bord de fuite présente de premiers segments 131 et 135 qui s'étendent perpendiculairement à la première nervure médiane 16 confère au panneau 1, dans cette région, une surface plus importante ce qui améliore sa stabilité et contribue amplement à la puissance d'écartement.

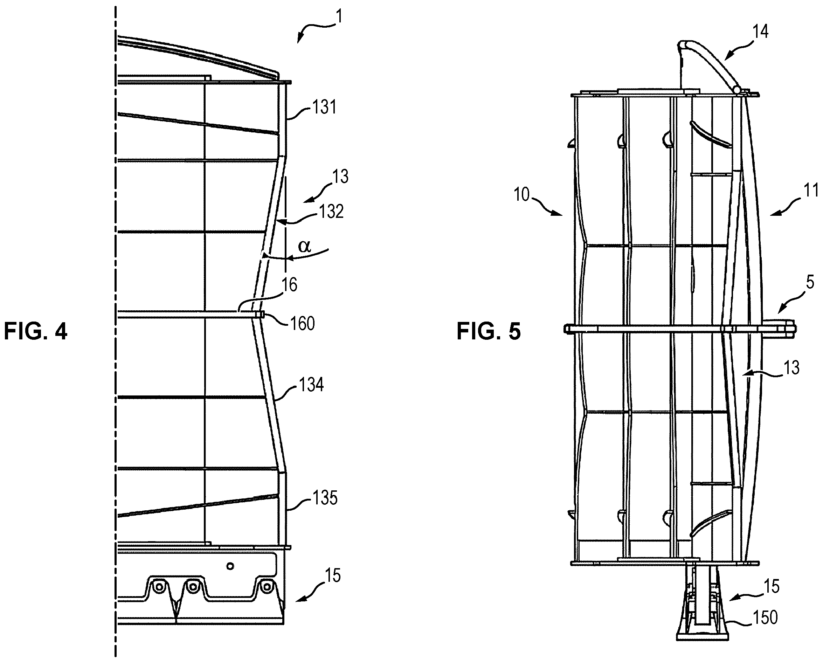

Avantageusement, les premiers segments 131 et 135 forment avec les seconds segments 132 et 134 un angle α compris entre 5 et 45° (voir figure 4).

Selon un mode de réalisation particulier, la longueur cumulée des premiers segments 131 et 135 est comprise entre 20 et 80 % de la longueur totale du bord de fuite 13.

Ces premiers segments 131 et 135 peuvent être de longueur identique ou être asymétriques.

On notera que des nervures additionnelles 7 sont prévues sur la face dorsale et dont la fonction est de réorienter le flux d'eau vers la partie centrale du panneau.

La face ventrale 11 comporte, à hauteur du volet 30, sur la nervure 16, un système 5 permettant d'y attacher la fune. Il comprend deux plaques situées de part et d'autre de la nervure 16, qui sont pourvues d'orifices traversants.

Les nervures supérieure 17 et inférieure 18 sont pourvues, sur la face dorsale 10, de série de trous débouchants 8. Ils permettent la fixation de pattes d'attache (non représentées) au chalut C.

La nervure 16 comporte, quant à elle, à hauteur d'un volet 20, une patte 6 pour la fixation d'une troisième patte d'attache au chalut.

Ainsi que cela est visible à la figure 5, le panneau 1, vu en bout, a la forme générale d'un dièdre à angle très ouvert, dont l'ouverture est dirigée du côté de la face ventrale 11. Son arête se situe selon une ligne médiane horizontale matérialisée par la nervure 16.

## Revendications

1. Panneau de chalut (1) qui comporte une face dorsale (10) et une face ventrale (11) et qui est délimité par un bord d'attaque (12) et un bord de fuite (13), ainsi que par un bord supérieur (14) et un bord inférieur (15) généralement convexes, chacun de ces bords supérieur (14) et inférieur (15) étant relié à une extrémité correspondante dudit bord d'attaque (12), respectivement dudit bord de fuite (13), ce panneau (1) étant pourvu d'au moins trois nervures (16,17,18) parallèles formant saillie sur lesdites faces dorsale (10) et ventrale (11) et comprenant une première nervure médiane (16), ainsi qu'une deuxième nervure supérieure (17) et une troisième nervure inférieure (18) qui s'étendent dudit bord d'attaque (12) audit bord de fuite (13), ces deuxième et troisième nervures (17,18) étant de longueur identique et l'image d'une de l'autre par rapport à ladite première nervure médiane (16),
**caractérisé par le fait que** l'extrémité (160) de ladite première nervure médiane (16), du côté dudit bord de fuite (13), se situe en retrait de celles (170,180) desdites deuxième et troisième nervures supérieure et inférieure (17,18), de sorte que ledit bord de fuite (13) comprend deux sections supérieure et inférieure (130,133) qui convergent en direction de ladite extrémité (160) de ladite première nervure médiane (16).

2. Panneau de chalut (1) selon la revendication 1, **caractérisé par le fait que** ledit bord de fuite (13) comprend deux premiers segments supérieur (131) et inférieur (135) perpendiculaires à ladite première nervure médiane (16), qui se raccordent à deux seconds segments supérieur (132) et inférieur (134) et qui constituent ensemble lesdites sections supérieure (130,133) et inférieure qui convergent en direction de ladite extrémité (160) de ladite première nervure médiane (16).

3. Panneau ce chalut (1) selon la revendication 2, **caractérisé par le fait que** lesdits premiers segments (131,135) forment avec lesdits seconds segments (132,134) un angle α compris entre 5 et 45°.

4. Panneau de chalut (1) selon l'une des revendications 2 ou 3, **caractérisé par le fait que** la longueur cumulée desdits deux premiers segments (131,135) supérieur et inférieur est comprise entre 20 et 80% de la longueur totale dudit bord de fuite (13).

5. Panneau de chalut (1) selon l'une des revendications 2 à 4, **caractérisé par le fait que** lesdits deux premiers segments supérieur (131) et inférieur (135) perpendiculaires à ladite première nervure médiane (16) sont de longueur égale.

6. Panneau de chalut (1) selon l'une des revendications 2 à 4, **caractérisé par le fait que** lesdits deux premiers segments supérieur (131) et inférieur (135) perpendiculaires à ladite première nervure médiane (16) sont de longueur différente.
